# EUROPEAN PATENT APPLICATION

(11) **EP 4 841 785 A1**
(43) Date of publication of application: **18.11.2026**
(21) Application number: 25852432.1
(22) Date of filing: 06.08.2025
(51) Int. Cl.: H01M 50/383, H01M 50/249, B60L 50/64, B60K 1/04

(54) **BATTERY CELL, AND BATTERY PACK AND VEHICLE INCLUDING SAME**

(30) Priority: 09.08.2024 KR 20240106943
(71) Applicant: LG Energy Solution, Ltd., Seoul 07335 (KR)
(72) Inventor: CHAE, Sang-Hak, Daejeon 34122 (KR); PARK, Sang-Jin, Daejeon 34122 (KR); PARK, Jong-Hoon, Daejeon 34122 (KR); BACK, Hee-Ji, Daejeon 34122 (KR); SON, Ui-Rim, Daejeon 34122 (KR); WOO, Yeong-Hoon, Daejeon 34122 (KR); LEE, Jun-Su, Daejeon 34122 (KR)
(74) Representative: Goddar, Heinz J.
(86) International application number: PCT/KR2025/011825
(87) International publication number: WO 2026/035027

(57) **Abstract**

Disclosed are a battery cell, and a battery pack and a vehicle including the same. The battery cell includes an electrode assembly including a positive electrode plate, a negative electrode plate, and a separator, and having a central hole formed therein; a battery can configured to accommodate the electrode assembly; and a current collector plate electrically connected to the electrode assembly, wherein the electrode assembly includes a combustion promoting member.

## Description

### TECHNICAL FIELD

This application is based on and claims priority from Korean Patent Application No. 10-2024-0106943, filed on August 9, 2024, with the Korean Intellectual Property Office, the disclosure of which is incorporated herein in its entirety by reference.

The present disclosure relates to a battery cell, and a battery pack and vehicle including the same and, more specifically, to a battery cell capable of preventing the spread of flame, and a battery pack and a vehicle including the same.

### BACKGROUND ART

Secondary batteries, which offer high applicability across product categories and possess electrical characteristics such as high energy density and the like, are widely applied not only to portable devices but also to electric vehicles (EVs) or hybrid electric vehicles (HEVs) that are driven by electric power sources.

Such secondary batteries are gaining attention as a new energy source for enhancing environmental sustainability and energy efficiency not only due to their primary advantage of significantly reducing the use of fossil fuels, but also because they generate no byproducts from energy usage.

Secondary batteries that are currently widely used include lithium-ion batteries, lithium polymer batteries, nickel-cadmium batteries, nickel-metal hydride batteries, and nickel-zinc batteries. The operating voltage of this unit secondary battery cell is approximately 2.5V to 4.5V.

Therefore, when an output voltage higher than this is required, a battery module or battery pack may be configured by connecting a plurality of battery cells in series. In addition, a battery module or battery pack may be configured by connecting multiple battery cells in parallel depending on the charge/discharge capacity required for the battery pack. Accordingly, the number of battery cells included in the battery module or battery pack may be set in various ways depending on at least one of the required output voltage and charge/discharge capacity.

Meanwhile, secondary battery cells may be classified into cylindrical, prismatic, and pouch-type battery cells. In the case of a cylindrical battery cell, positive and negative electrode plates are wounded with a separator interposed, as an insulator, between them to form a jelly roll-type electrode assembly, and the electrode assembly is then inserted, along with an electrolyte, into a battery can to form a battery. In addition, the cylindrical battery cell may include a current collector used to electrically connect the positive and negative electrode plates, respectively.

Lithium secondary batteries are currently in the spotlight due to their advantages such as high operating voltage and significantly higher energy density, but because they use organic electrolytes, there is a problem that lithium secondary batteries can cause overcurrent and overheating when overcharged, which in severe cases may cause fire due to explosion or ignition.

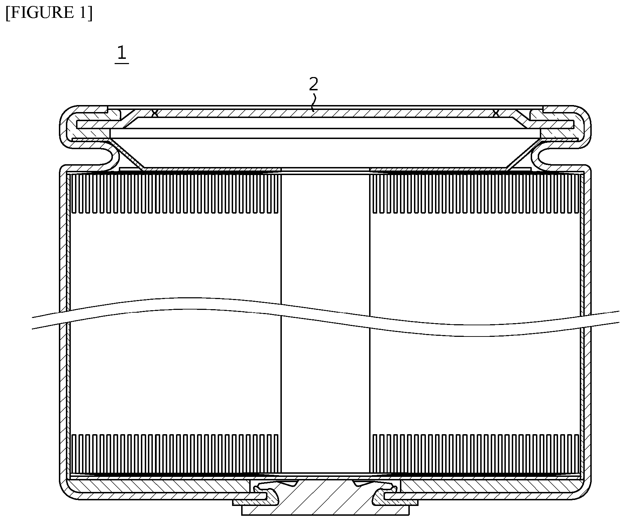

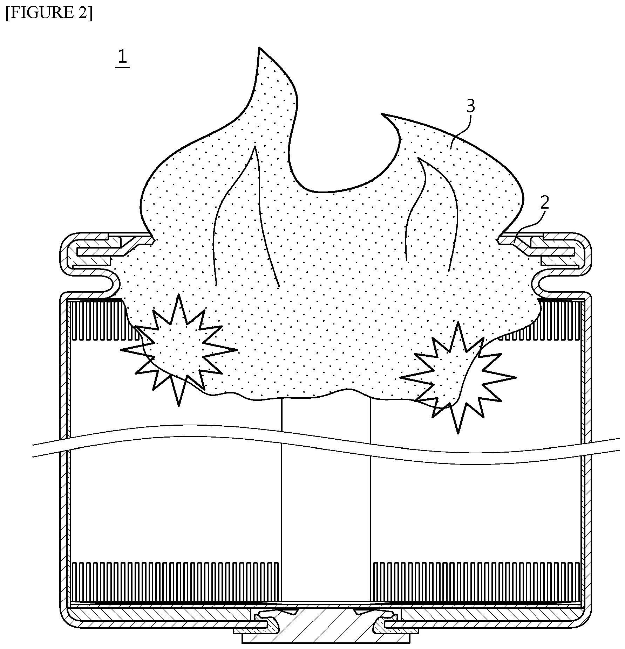

FIG. 1 is a cross-sectional view showing a battery cell in normal operation, and FIG. 2 is a diagram showing a situation in which a flame occurs in the battery cell of FIG. 1.

If a thermal event occurs in the battery cell 1 of FIG. 1, as shown in FIG. 2, the cap plate 2 of the battery cell 1 ruptures and a flame 3 is emitted to the outside of the battery cell 1. If a flame is generated from one battery cell 1 and emitted to the outside of the battery cell 1 in this way, heat transfer to adjacent battery cells 1 may be accelerated.

In addition, due to this, a thermal runaway phenomenon may occur, and there is a problem that a driver of the electric vehicle may be burned or put in a dangerous situation due to the thermal runaway phenomenon.

### DISCLOSURE

### Technical Problem

Therefore, the present disclosure is directed to providing a battery cell that may prevent a flame from spreading to adjacent battery cells even if the flame occurs in one battery cell, and a battery pack and a vehicle including the same.

In addition, the present disclosure is directed to providing a battery pack that may prevent serial thermal runaway by preventing flame transfer and improve the stability of a battery cell, and a vehicle including the same.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery cell comprising: an electrode assembly including a positive electrode plate, a negative electrode plate, and a separator, and having a central hole formed therein; a battery can configured to accommodate the electrode assembly; and a current collector plate electrically connected to the electrode assembly, wherein the electrode assembly includes a combustion promoting member.

In an embodiment, the combustion promoting member may include a center pin inserted into the central hole of the electrode assembly; and an ignition agent provided on the center pin.

In an embodiment, the ignition agent may contain red phosphorus or gunpowder.

In an embodiment, the ignition agent may be applied to an outer surface of the center pin.

In an embodiment, the center pin may be made of a flammable material.

In an embodiment, the combustion promoting member may include a center pin inserted into the central hole of the electrode assembly; and a combustion promoter provided in the center pin.

In an embodiment, the combustion promoter may contain a gas that helps combustion of the electrode assembly.

In an embodiment, the combustion promoter may contain one of oxygen, chlorine, and fluorine.

In an embodiment, the combustion promoter may be stored inside the center pin.

In an embodiment, a storage unit may be coupled to the center pin, and the combustion promoter may be stored in the storage unit.

In an embodiment, the storage unit may be manufactured to contain at least one of vinyl, plastic and rubber.

In still another aspect of the present disclosure, there is provided a battery pack including at least one battery cell described above, and a vehicle including at least one battery cell.

### Advantageous Effects

The embodiments of the present disclosure have the effect of preventing a flame from spreading to adjacent battery cells even if the flame occurs in one battery cell.

In addition, there is an effect of preventing serial thermal runaway by preventing flame transfer and improving the stability of the battery cell.

However, the effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a cross-sectional view showing a battery cell in normal operation.
FIG. 2 is a diagram showing a situation in which a flame occurs in the battery cell of FIG. 1.
FIG. 3 is a cross-sectional view showing a battery cell according to the first embodiment of the present disclosure.
FIG. 4 is a diagram showing a situation in which a flame occurs inside the battery cell of FIG. 3.
FIG. 5 is a cross-sectional view showing a battery cell according to the second embodiment of the present disclosure.
FIG. 6 is a cross-sectional view showing a battery cell according to the third embodiment of the present disclosure.
FIG. 7 is a cross-sectional view showing a battery cell according to the fourth embodiment of the present disclosure.
FIG. 8 is a cross-sectional view showing a battery cell according to the fifth embodiment of the present disclosure.
FIG. 9 is a cross-sectional view showing a battery cell according to the sixth embodiment of the present disclosure.
FIG. 10 is a schematic diagram showing the configuration of a battery pack including the battery cell according to each embodiment of the present disclosure.
FIG. 11 is a diagram for illustrating a vehicle including the battery pack according to each embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the sizes of respective elements or specific parts of each element are exaggerated, omitted, or simplified for convenience of explanation and clarification thereof. Accordingly, the sizes of respective elements do not entirely reflect their actual sizes. Descriptions of related known functions or configurations, which may obscure the subject matter of the present disclosure, will be omitted.

In this specification, when it is stated that a certain component is "coupled to" or "coupled to" another component, it should be understood that the component may be directly joined or coupled to the other component, or that they may be indirectly joined or coupled via a connecting member provided between them.

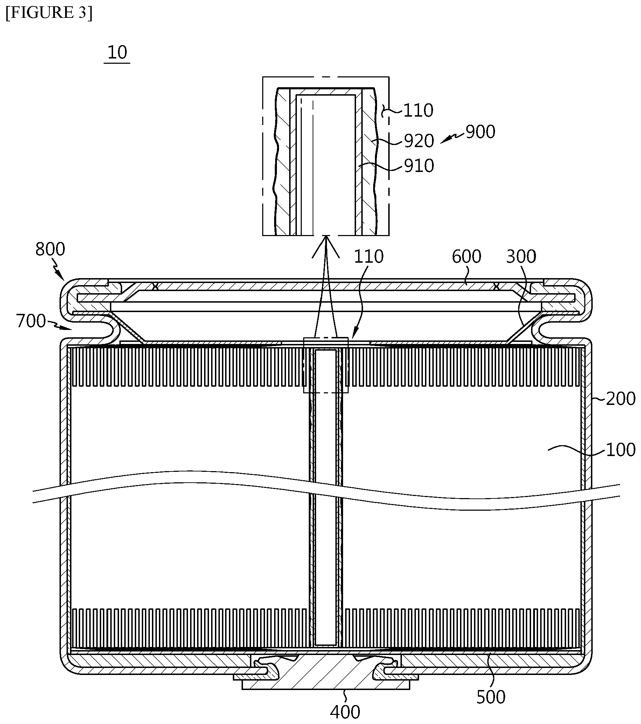

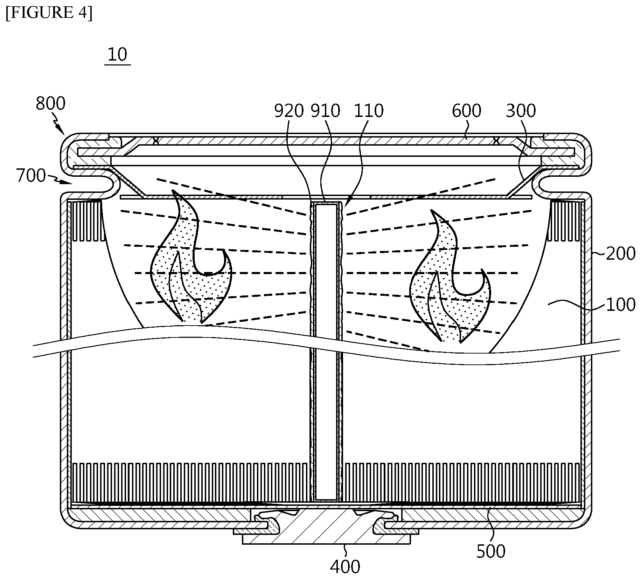

FIG. 3 is a cross-sectional view showing a battery cell according to the first embodiment of the present disclosure, and FIG. 4 is a diagram showing a situation in which a flame occurs inside the battery cell of FIG. 3.

Referring to FIG. 3, the battery cell 10 according to one embodiment of the present disclosure includes an electrode assembly 100, a battery can 200, and a current collector plate (e.g., a negative electrode current collector plate 300 and a positive electrode current collector plate 500).

The electrode assembly 100 includes a positive electrode plate, a negative electrode plate, and a separator interposed between the positive electrode plate and the negative electrode plate. Here, the separator may be formed as a jelly-roll type having a structure wound in one direction.

For example, the electrode assembly 100 may be manufactured by winding a stack formed by sequentially stacking a negative electrode plate, a separator, a positive electrode plate, and a separator at least once. Here, the positive electrode plate and the negative electrode plate may be formed in a sheet shape.

That is, the electrode assembly 100 applied to this embodiment may be a winding-type electrode assembly 100. In this case, an additional separator may be provided on the outer surface of the electrode assembly 100 for insulation from the battery can 200. That is, the electrode assembly 100 may have any winding structure well known in the relate art.

The electrode assembly 100 may include a combustion promoting member 900. The electrode assembly 100 may include the combustion promoting member 900 in various ways, and specific details thereof will be described later.

A positive electrode active material is applied to one or both sides of the positive electrode plate, and a first uncoated portion on which the positive electrode active material is not applied may be formed at an end of the positive electrode plate. The first uncoated portion may be exposed to the outside of the separator while forming a plurality of winding turns based on the center of the electrode assembly 100, and may be used as an electrode tab in itself. The battery cell 10 according to one embodiment of the present disclosure may include an embodiment of a positive electrode plate in which the first uncoated portion is not formed. However, for convenience of explanation, the following description will focus on a case in which the first uncoated portion is formed on the positive electrode plate.

A negative electrode active material is coated on one or both sides of the negative electrode plate, and a second uncoated portion on which the negative electrode active material is not coated may be formed at an end of the negative electrode plate. The second uncoated portion is exposed to the outside of the separator while forming a plurality of winding turns based on the center of the electrode assembly 100, and may be used as an electrode tab in itself. The battery cell 10 according to one embodiment of the present disclosure may include an embodiment of a negative electrode plate in which the second uncoated portion is not formed. However, for convenience of explanation, the following description will focus on a case in which the second uncoated portion is formed on the positive electrode plate.

That is, at least one of the positive electrode plate and the negative electrode plate may include an uncoated portion, in which the active material is not coated, at the long side end in the winding direction. In addition, the first uncoated portion and the second uncoated portion may be configured to face in opposite directions.

Here, the positive electrode active material coated on the positive electrode plate and the negative electrode active material coated on the negative electrode plate may use any active materials known in the art without limitation.

In addition, the separator may be formed of a porous polymer film made of, for example, a polyolefin-based polymer such as an ethylene homopolymer, a propylene homopolymer, an ethylene-butene copolymer, an ethylene-hexene copolymer, or an ethylene-methacrylate copolymer, in a single layer or multiple layers.

As another example, the separator may be formed of a conventional porous nonwoven fabric, for example, a nonwoven fabric made of high-melting-point glass fibers, polyethylene terephthalate fibers, or the like.

At least one surface of the separator may include a coating layer of inorganic particles. In addition, the separator itself may be formed of a coating layer of inorganic particles. The particles constituting the coating layer may have a structure in which they are bound with a binder to form an interstitial volume between adjacent particles.

Referring to FIG. 3, a central hole 110 may be formed at the center of the electrode assembly 100, and the central hole 110 of the electrode assembly 100 may be used for welding the cell terminal 400 (positive electrode terminal) and the positive electrode current collector plate 500. That is, the electrode assembly 100 may be configured to weld the cell terminal 400 and the positive electrode current collector plate 500 by irradiating a laser beam through the central hole 110 of the electrode assembly 100. In addition, a center pin 910, explained later, may be inserted into the central hole 110 of the electrode assembly 100.

Referring to FIG. 3, the electrode assembly 100 is stored in the battery can 200. Here, the battery can 200 may be, for example, formed in a cylindrical shape so that the electrode assembly 100 may be accommodated inside the battery can 200, and electrically connected to the negative electrode plate of the electrode assembly 100. As a result, the battery can 200 may have the same polarity as the negative electrode plate, i.e., the negative polarity.

Here, the diameter of the battery can 200 is larger than the diameter of the electrode assembly 100. A gap of a preset size is formed between the battery can 200 and the positive electrode current collector plate 500, and an insulator may be interposed within the gap.

If the size of the electrode assembly 100 is increased in a state where the size of the battery can 200 is determined according to the standard, the total capacity of the battery cell 10 increases, but the gap between the battery can 200 and the electrode assembly 100 decreases.

That is, if the size of the electrode assembly 100 is increased to increase the overall capacity of the battery cell 10, the gap between the battery can 200 and the electrode assembly 100 decreases. Thus, in order to increase the capacity of the battery cell 10, an insulator must be able to be interposed within the reduced gap between the battery can 200 and the electrode assembly 100, and for this purpose, it is desirable that the thickness of the insulator is as thin as possible.

The battery can 200 is, for example, a roughly cylindrical container, and may be made of a conductive material, such as metal. The battery can 200 may be made of a conductive metal, such as aluminum, steel, or stainless steel, but is not limited thereto.

The current collector plate is electrically connected to the electrode assembly 100 and may include a negative electrode current collector plate 300 and a positive electrode current collector plate 500.

The negative electrode current collector plate 300 is electrically connected to the negative electrode plate. The negative electrode current collector plate 300 is connected to the second uncoated portion of the electrode assembly 100. Referring to FIG. 3, the negative electrode current collector plate 300 is attached to the upper portion of the electrode assembly 100. The negative electrode current collector plate 300 is made of a conductive metal material such as aluminum, steel, copper, or nickel, and may be electrically connected to the second uncoated portion of the negative electrode plate.

The negative electrode current collector plate 300 may be electrically connected to the battery can 200. For this purpose, the negative electrode current collector plate 300 may be fixed such that at least a portion of the edge portion thereof is interposed between the inner surface of the battery can 200 and the sealing gasket.

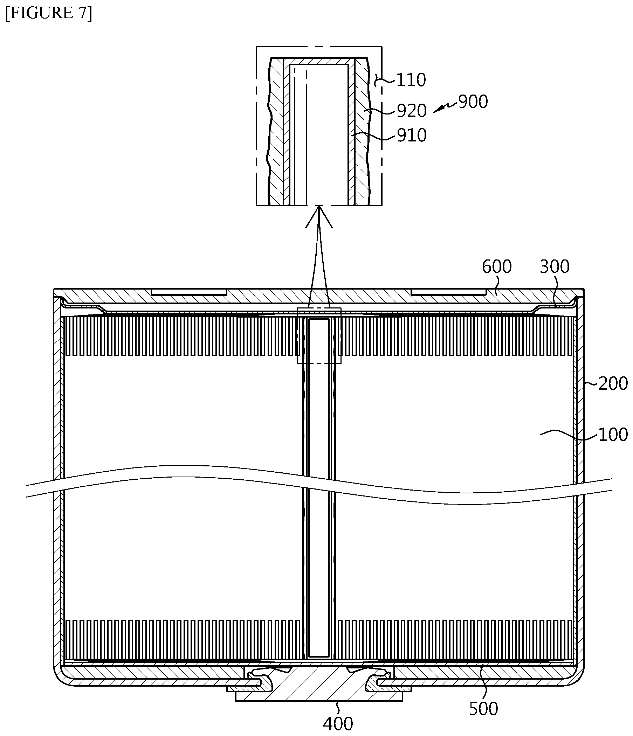

In one embodiment, at least a portion of the edge portion of the negative electrode current collector plate 300 may be supported by the beading portion 700 formed on the battery can 200 and fixed to the beading portion 700 by welding. In a modified embodiment (see FIG. 7), at least a portion of the edge portion of the negative electrode current collector plate 300 may be welded directly to the inner surface of the battery can 200.

In addition, at least a portion of the remaining portion, excluding the coupling portion of the beading portion 700 of the negative electrode current collector plate 300, may be coupled to the folded surface of the second uncoated portion by welding, for example, laser welding.

Also, at least a portion of the edge of the negative electrode current collector plate 300 may be electrically coupled to a surface adjacent to the beading portion 700 and the crimping portion 800.

The positive electrode current collector plate 500 is electrically connected to the positive electrode plate. The positive electrode current collector plate 500 is made of a conductive metal material and is connected to the first uncoated portion of the electrode assembly 100. The positive electrode current collector plate 500 may be coupled to a coupling surface formed by bending the end of the first uncoated portion in a direction parallel to the positive electrode current collector plate 500. The bending direction of the first uncoated portion may, for example, be a direction toward the winding center of the electrode assembly 100.

When the first uncoated portion is bent as described above, the space occupied by the first uncoated portion may be reduced, thereby improving energy density. In addition, the bonding area between the first uncoated portion and the positive electrode current collector plate 500 may increase, leading to improved bonding strength and reduced resistance.

The cell terminal 400 is made of a conductive metal material and is electrically connected to the positive electrode current collector plate 500. In addition, the cell terminal 400 is electrically connected to the positive electrode plate of the electrode assembly 100 through the positive electrode current collector plate 500, thereby having the positive polarity.

That is, the cell terminal 400 may function as a positive electrode terminal. In addition, the battery can 200 may be electrically connected to the negative electrode plate of the electrode assembly 100 as described above, thereby having the negative polarity.

The cap plate 600 is configured to seal the open portion formed in the battery can 200. The cap plate 600 may be made of, for example, a metal material to ensure rigidity. In addition, the cap plate 600 may be separated from the electrode assembly 100 to have no polarity. In other words, even if the cap plate 600 is made of a conductive metal material, the cap plate 600 may not have polarity.

The fact that the cap plate 600 has no polarity means that the cap plate 600 is electrically insulated from the battery can 200 and the cell terminal 400. As such, the cap plate 600 may not be polarized, and its material does not necessarily have to be a conductive metal.

A beading portion 700 and a crimping portion 800 may be formed on the battery can 200, and the cap plate 600 may be mounted on and supported by the beading portion 700 formed on the battery can 200. In addition, the cap plate 600 is fixed by the crimping portion 800. A sealing gasket may be interposed between the cap plate 600 and the crimping portion 800 of the battery can 200 to ensure airtightness of the battery can 200.

The beading portion 700 is formed by press-fitting the perimeter of the outer circumference of the battery can 200 inward. The beading portion 700 supports the electrode assembly 100, which has a size roughly corresponding to the width of the battery can 200, so that the electrode assembly 100 does not fall out of the battery can 200, and may also function as a support on which the cap plate 600 is mounted. In addition, the beading portion 700 may support the outer circumferential surface of the sealing gasket.

The crimping portion 800 is provided to extend and bend inwardly of the battery can 200 and to surround and fix the edge of the cap plate 600 together with the sealing gasket. In addition, the crimping portion 800 may be formed on the upper or lower portion of the beading portion 700.

In addition, the present disclosure includes a case where the battery can 200 does not have at least one of the beading portion 700 and the crimping portion 800. In this case, at least a portion of the edge portion of the negative electrode current collector plate 300 may be configured to be directly welded to the inner surface of the battery can 200 to support the electrode assembly 100. In addition, the cap plate 600 may also be directly coupled to the battery can 200.

This will be described later with reference to FIGS. 7 to 9.

As described above, the electrode assembly 100 includes a combustion promoting member 900, and the combustion promoting member 900 is described in detail below.

Referring to FIG. 3, the combustion promoting member 900 may include a center pin 910 and an ignition agent 920. The center pin 910 is inserted into the central hole 110 of the electrode assembly 100. Here, the center pin 910 may contact the electrode assembly 100 to structurally support the electrode assembly 100, or may be separated from the center pin 910 and coupled to a portion other than the electrode assembly 100, for example, a current collector plate.

The ignition agent 920 may be provided on the center pin 910. For example, as shown in FIG. 3, the ignition agent 920 may be applied to the outer surface of the center pin 910. Also, the ignition agent 920 completely combusts the electrode assembly 100 inside the battery can 200 by sparks generated due to a thermal event.

As described above, if a thermal event occurs in the battery cell 10, the cap plate 600 of the battery cell 10 ruptures as shown in FIG. 2, and the flame is discharged to the outside of the battery cell 10 and may be transferred to neighboring battery cells 10.

Typically, a fire occurs under three conditions: a burning substance, oxygen, and a temperature above the ignition point. If a thermal event occurs inside the battery cell 10, the electrode assembly 100 acts as a burning substance.

Therefore, if the electrode assembly 100 is completely burned before the cap plate 600 of the battery cell 10 ruptures, that is, while the cap plate 600 is connected to the battery can 200, the burning material may become extinct to remove the flame.

In addition, since the flame is removed, the flame may be prevented from being transferred to other adjacent battery cells 10, and also the chain thermal runaway may be prevented by blocking the transfer of the flame, thereby improving the stability of the battery cell 10.

To this end, as shown in FIG. 4, the ignition agent 920 provided in the center pin 910 is configured to be ignited by a spark generated inside the battery can 200 and burn the entire electrode assembly 100 inside the battery can 200 before the cap plate 600 of the battery cell 10 ruptures.

Here, the ignition agent 920 may be various and may include, for example, red phosphorus or gunpowder. Red phosphorus is a red-colored powder, one of the allotropes of phosphorus, which may easily ignite at low temperatures by reacting with air.

Gunpowder is a powdered mixture of sulfur, potassium nitrate, and charcoal, and is also easily ignitable. Here, the components of gunpowder are not limited to the above, and may be more diverse. In addition, the ignition agent 920 is not limited to red phosphorus or gunpowder, and may be more diverse.

Meanwhile, the center pin 910 may be made of a flammable material and may be configured so that when the electrode assembly 100 burns, the center pin 910 also burns out.

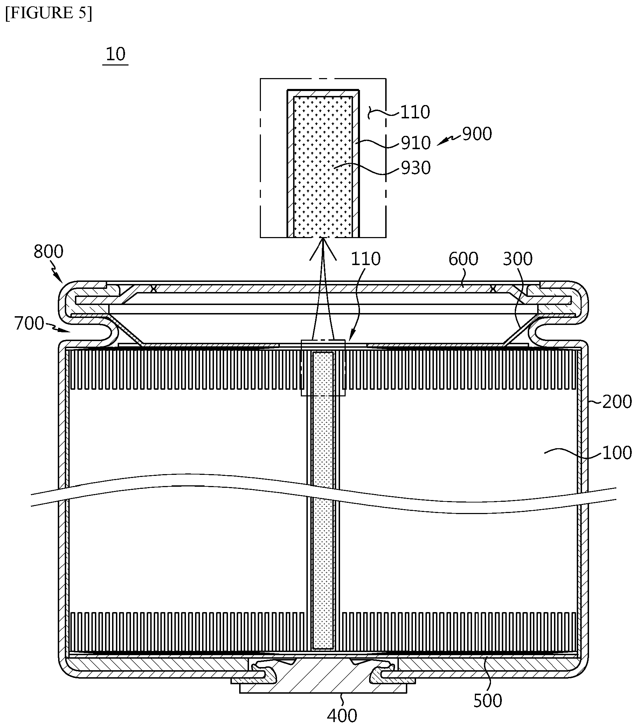

FIG. 5 is a cross-sectional view showing a battery cell according to the second embodiment of the present disclosure.

The second embodiment of the present disclosure is structurally different from the first embodiment in that it includes a combustion promoter 930 instead of the ignition agent 920. However, any feature of the second embodiment that is common to the feature described in the first embodiment is replaced by the description of the first embodiment. Furthermore, any feature described in the second embodiment that is applicable to the first embodiment may also be applied to the first embodiment.

Referring to FIG. 5, the combustion promoting member 900 may include a center pin 910 and a combustion promoter 930. The center pin 910 is inserted into the central hole 110 of the electrode assembly 100. The description of the center pin 910 is replaced with the above description.

In addition, the combustion promoter 930 is provided in the center pin 910. The combustion promoter 930 may be selected from a variety of substances that assist combustion of the electrode assembly 100, for example, a gas. For example, the combustion promoter 930 may contain one of oxygen, chlorine, and fluorine.

The combustion promoter 930 may be arranged at various locations of the center pin 910, and for example, may be stored inside the center pin 910, as shown in FIG. 5. In addition, if the center pin 910 is made of a flammable material and a hole or the like is formed in at least a portion of the center pin 910 by the flame, the combustion promoter 930 stored inside the center pin 910 comes out of the center pin 910, thereby increasing the combustion action of the flame. In addition, due to this, the electrode assembly 100 may burn more quickly.

If more combustion promoter 930, such as oxygen, is supplied in this way, the combustion rate of the electrode assembly 100 increases, so that the entire electrode assembly 100 inside the battery can 200 may be burned before the cap plate 600 of the battery cell 10 ruptures.

In addition, since the burning material (here, the electrode assembly) is extinguished and the flame is removed, the flame transfer and chain thermal runaway may be prevented, thereby improving the stability of the battery cell 10.

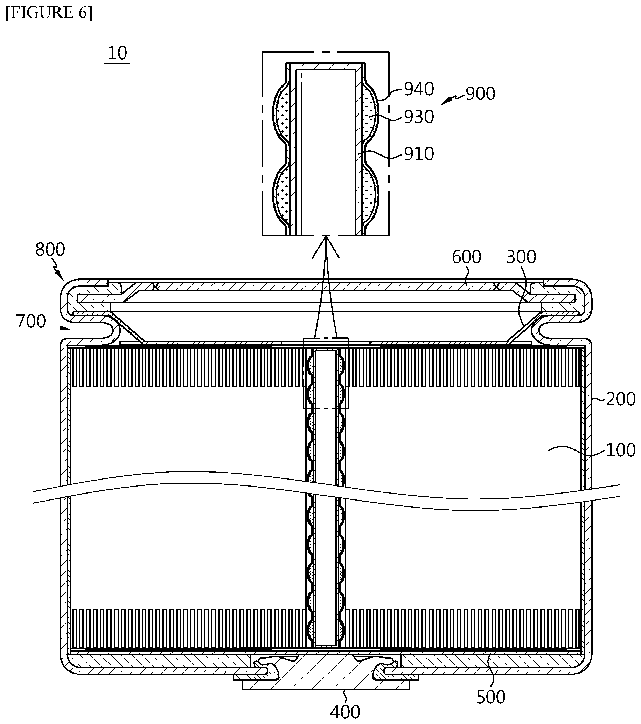

FIG. 6 is a cross-sectional view showing a battery cell according to the third embodiment of the present disclosure.

The third embodiment of the present disclosure is structurally different from the first embodiment or the second embodiment in that a storage unit 940 in which combustion promoter 930 is stored is provided separately. However, any feature of the third embodiment that is common to the feature described in the first embodiment or the second embodiment is replaced by the description of the first embodiment or the second embodiment. Furthermore, any feature described in the third embodiment that is applicable to the first embodiment or the second embodiment may also be applied to the first embodiment or the second embodiment.

Referring to FIG. 6, the storage unit 940 is coupled to the center pin 910. As in FIG. 6, for example, the storage unit 940 may be coupled to the perimeter of the outer surface of the center pin 910.

In addition, the combustion promoter 930 is stored in the storage unit 940. The storage unit 940 may be diverse and may be manufactured to contain, but not limited to, at least one of vinyl, plastic, and rubber.

If a flame occurs inside the battery can 200, the storage unit 940 is damaged by the flame, and the combustion promoter 930 inside the storage unit 940 flows out of the storage unit 940, increasing the combustion rate of the electrode assembly 100. A detailed description of the combustion promoter 930 is replaced with the description of the above second embodiment.

FIG. 7 is a cross-sectional view showing a battery cell according to the fourth embodiment of the present disclosure.

The fourth embodiment of the present disclosure is structurally different from the first to third embodiments in that the battery can 200 does not have at least one of the beading portion 700 and the crimping portion 800. However, any feature of the fourth embodiment that is common to the feature described in the first to third embodiments is replaced by the description of the first to third embodiments. Furthermore, any feature described in the fourth embodiment that is applicable to the first to third embodiments may also be applied to the first to third embodiments.

Referring to FIG. 7, both the beading portion 700 and the crimping portion 800 are not formed. In addition, at least a portion of the edge portion of the negative electrode current collector plate 300 is directly welded to the inner surface of the battery can 200 to support the electrode assembly 100.

If the beading portion 700 and the crimping portion 800 are not formed and the negative electrode current collector plate 300 is directly welded to the inner surface of the battery can 200 in this way, the space inside the battery can 200 is increased, which has the effect of increasing the energy density.

In addition, referring to FIG. 7, the combustion promoting member 900 includes a center pin 910 and an ignition agent 920. A detailed description of the center pin 910 and the ignition agent 920 is replaced with the description of the above first embodiment.

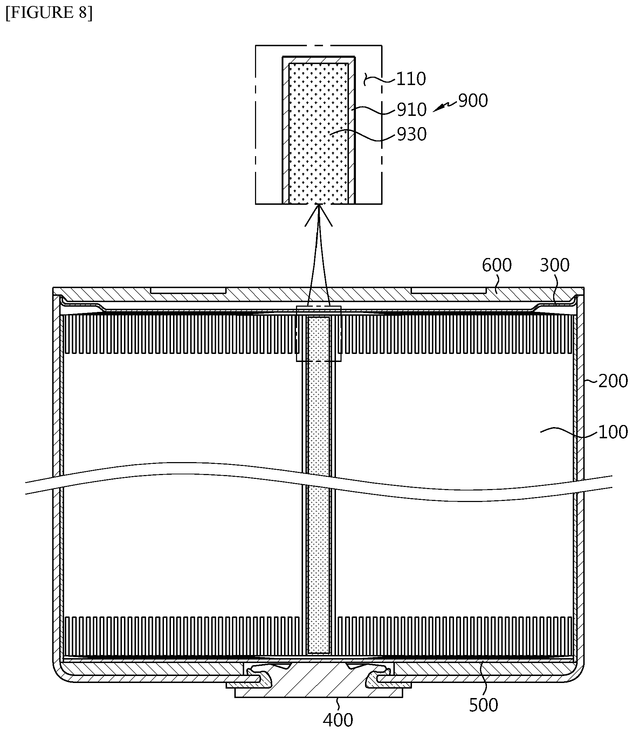

FIG. 8 is a cross-sectional view showing a battery cell according to the fifth embodiment of the present disclosure.

The fifth embodiment of the present disclosure is structurally different from the first to fourth embodiments in that the battery can 200 does not have at least one of the beading portion 700 and the crimping portion 800, and also includes the combustion promoter 930. However, any feature of the fifth embodiment that is common to the feature described in the first to fourth embodiments is replaced by the description of the first to fourth embodiments. Furthermore, any feature described in the fifth embodiment that is applicable to the first to fourth embodiments may also be applied to the first to fourth embodiments.

Referring to FIG. 8, both the beading portion 700 and the crimping portion 800 are not formed. In addition, at least a portion of the edge portion of the negative electrode current collector plate 300 is directly welded to the inner surface of the battery can 200 to support the electrode assembly 100. The description thereof is replaced with the description of the above fourth embodiment.

In addition, referring to FIG. 8, the combustion promoting member 900 includes a center pin 910 and a combustion promoter 930. The description of the center pin 910 and the combustion promoter 930 is replaced with the description of the above second embodiment.

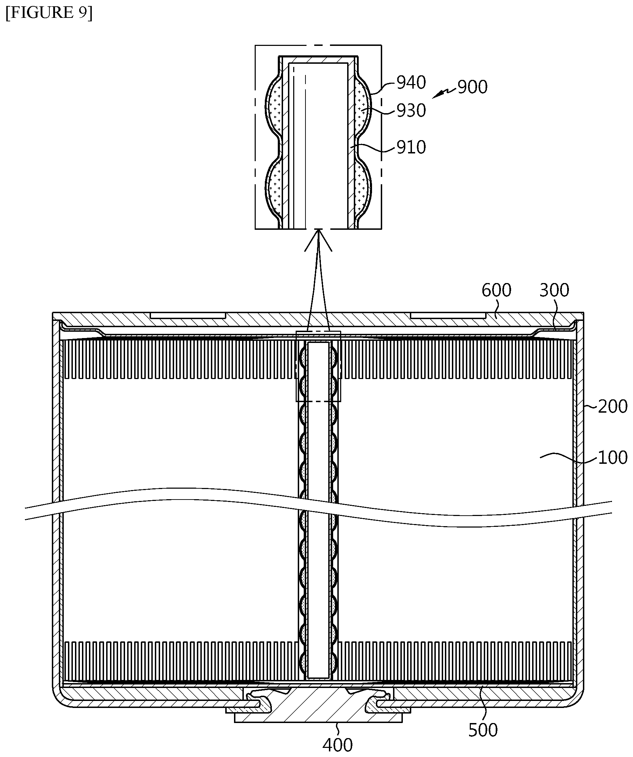

FIG. 9 is a cross-sectional view showing a battery cell according to the sixth embodiment of the present disclosure.

The sixth embodiment of the present disclosure is structurally different from the first to fifth embodiments in that the battery can 200 does not have at least one of the beading portion 700 and the crimping portion 800, and also includes the combustion promoter 930 and the storage unit 940. However, any feature of the sixth embodiment that is common to the feature described in the first to fifth embodiments is replaced by the description of the first to fifth embodiments. Furthermore, any feature described in the sixth embodiment that is applicable to the first to fifth embodiments may also be applied to the first to fifth embodiments.

Referring to FIG. 9, both the beading portion 700 and the crimping portion 800 are not formed. In addition, at least a portion of the edge portion of the negative electrode current collector plate 300 is directly welded to the inner surface of the battery can 200 to support the electrode assembly 100. The description thereof is replaced with the description of the above fourth embodiment.

In addition, referring to FIG. 9, the combustion promoting member 900 includes a center pin 910 and a combustion promoter 930, and also includes a storage unit 940. The description of the center pin 910, the combustion promoter 930, and the storage unit 940 is replaced with the description of the above third embodiment.

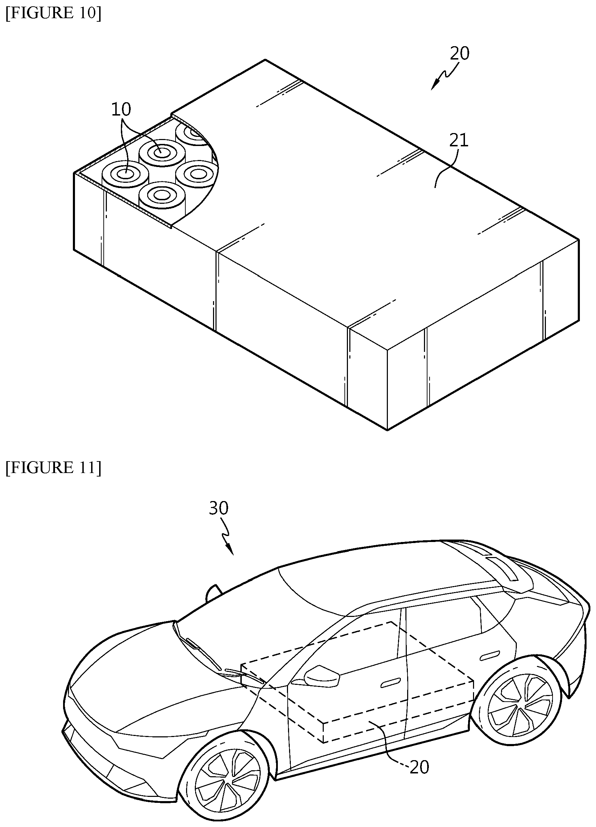

FIG. 10 is a schematic diagram showing the configuration of a battery pack including the battery cell according to each embodiment of the present disclosure.

Referring to FIG. 10, a battery pack 20 according to an embodiment of the present disclosure may include one or more battery cells 10 according to each embodiment of the present disclosure described above. In addition, the battery pack 20 may further include a pack case 21 for accommodating the battery cells 10 and various devices for controlling the charging and discharging of the cylindrical battery cells 10, such as a BMS, a current sensor, and a fuse.

FIG. 11 is a diagram for illustrating a vehicle including the battery pack according to each embodiment of the present disclosure.

Referring to FIG. 11, a vehicle 30 according to an embodiment of the present disclosure may include one or more cylindrical battery cells 10 or one or more battery packs 20 according to each embodiment described above. Here, the vehicle 30 includes various vehicles, such as an electric vehicle or a hybrid vehicle, designed to use electricity.

Although terms indicating directions such as upper, lower, left, right, front, and rear directions are used in this specification, it is obvious to those skilled in the art to which the present disclosure pertains that these terms are only for convenience of explanation with reference the relevant drawings and may vary depending on the position of the target object or the position of the observer.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains. Therefore, the foregoing embodiments should be considered in a descriptive sense only and not for purposes of limitation. That is, the true scope of the technical concept of the present disclosure is defined by the claims, and all variations or modifications equivalent thereto should be interpreted as being included within the scope of the present disclosure.

### INDUSTRIAL APPLICABILITY

The present disclosure relates to a battery cell, and a battery pack and a vehicle including the same, and is particularly applicable to industries related to secondary batteries.

## Claims

1. A battery cell comprising:
an electrode assembly including a positive electrode plate, a negative electrode plate, and a separator, and having a central hole formed therein;
a battery can configured to accommodate the electrode assembly; and
a current collector plate electrically connected to the electrode assembly,
wherein the electrode assembly includes a combustion promoting member.

2. The battery cell according to claim 1,
wherein the combustion promoting member includes:
a center pin inserted into the central hole of the electrode assembly; and
an ignition agent provided on the center pin.

3. The battery cell according to claim 2,
wherein the ignition agent contains red phosphorus or gunpowder.

4. The battery cell according to claim 2,
wherein the ignition agent is applied to an outer surface of the center pin.

5. The battery cell according to claim 2,
wherein the center pin is made of a flammable material.

6. The battery cell according to claim 1,
wherein the combustion promoting member includes:
a center pin inserted into the central hole of the electrode assembly; and
a combustion promoter provided in the center pin.

7. The battery cell according to claim 6,
wherein the combustion promoter contains a gas that helps combustion of the electrode assembly.

8. The battery cell according to claim 7,
wherein the combustion promoter contains one of oxygen, chlorine, and fluorine.

9. The battery cell according to claim 6,
wherein the combustion promoter is stored inside the center pin.

10. The battery cell according to claim 6,
wherein a storage unit is coupled to the center pin, and the combustion promoter is stored in the storage unit.

11. The battery cell according to claim 10,
wherein the storage unit is manufactured to contain at least one of vinyl, plastic and rubber.

12. A battery pack comprising at least one battery cell according to any one of claims 1 to 11.

13. A vehicle comprising at least one battery cell according to any one of claims 1 to 11.
